# EUROPÄISCHE PATENTANMELDUNG

(11) **EP 2 896 729 A1**
(43) Veröffentlichungstag der Anmeldung: **22.07.2015**
(21) Anmeldenummer: 15151614.3
(22) Anmeldetag: 19.01.2015
(51) Int. Cl.: D03D 15/00, B60J 7/12, D02G 3/44, D02G 3/12

(54) **Fahrzeugverdeckstoff**

(30) Priorität: 17.01.2014 WO PCT/EP2014/050889
(71) Anmelder: Bloch, Klaus, 53757 Sankt Augustin (DE)
(72) Erfinder: Bloch, Klaus, 53757 Sankt Augustin (DE)
(74) Vertreter: Wagner, Matthias

(57) **Zusammenfassung**

Die Erfindung betrifft einen Fahrzeugverdeckstoff, enthaltend eine Gewebebahn (2) aus miteinander verwobenen Kett- und Schussgarnen (3, 4) auf Basis von Polymerkunststoffen, wobei die Kettgarne (3) aus Kettfäden (30) und die Schussgarne (4) aus Schussfäden (40) gebildet sind und Drähte aus elektrisch leitendem Material in die Gewebebahn (2) eingelagert sind, wobei zumindest einige der Kettgarne (3) Kettfäden (30) umfassen, die gemeinsam mit mindestens einem monofilen und elektrisch leitfähigen Edelstahldraht (5) zu den Kettgarnen (3) verzwirnt sind; und/oder zumindest einige der Schussgarne (4) Schussfäden (40) umfassen, die gemeinsam mit mindestens einem monofilen und elektrisch leitfähigen Edelstahldraht (5) zu den Schussgarnen (4) verzwirnt sind.

## Beschreibung

Die Erfindung betrifft einen Fahrzeugverdeckstoff, wie er beispielsweise für Cabriolets aber auch für Boote und andere Fahrzeuge Verwendung finden kann.

Ein Fahrzeugverdeck z.B. eines Cabriolets weist ein üblicherweise metallisches Verdeckgestänge und einen von dem Verdeckgestänge aufspannbaren Fahrzeugverdeckstoff, kurz auch als Verdeckstoff bezeichnet, auf. Das Verdeckgestänge in Verbindung mit dem von diesem aufspannbaren Verdeckstoff stellt sicher, dass ein solches Fahrzeugverdeck, insbesondere bei einem Cabriolet öffen- und schließbar ist, was durch die entsprechende Ausgestaltung des Verdeckgestänges und die Flexibilität des Verdeckstoffes sichergestellt wird.

Im Zuge stetig steigender Energiekosten kommt dem Leichtbau bei der Auslegung von Fahrzeugen eine immer größere Rolle zu, so dass vermehrt Karosseriebauteile, die bislang aus Stahlblech hergestellt worden sind, zur Gewichtseinsparung aus Kunststoffmaterialien, z.B. carbonfaserverstärkten Composites hergestellt werden. Während die aufgrund des niedrigeren Gewichts möglichen Vorteile bei der Energieeinsparung eines solchen Fahrzeuges auf der Hand liegen, geht jedoch insbesondere bei Cabriolets mit Stoffdach die Eigenschaft der Karosserie verloren, im Falle eines Gewitters als faradayscher Käfig zu wirken und den Insassen des Fahrzeuges einen Schutz vor Blitzschlag zu bieten.

Bei dem derzeit allgemeinen üblichen Konstruktionsziel, immer mehr Metall in der Karosserie bzw. Fahrzeugstruktur einzusparen, ist somit gerade bei den in Leichtbauweise erstellten Cabriolets kein ausreichender Blitzschutz mehr gegeben.

Aus der EP 0 377 813 B1 ist es bereits bekannt, einen Verdeckstoff, enthaltend Gewebebahnen aus miteinander verwobenen Kett- und Schussgarnen auf Basis von Polymerkunststoffen so weiterzubilden, dass Drähte aus elektrisch leitendem Material in die Gewebebahn eingelagert werden, um die Wirkung als faradayscher Käfig aufrechtzuerhalten. Da jedoch Fahrzeugverdeckstoffe einer hohen dynamischen Belastung und starken Witterungseinflüssen ausgesetzt sind, neigen in die Gewebebahn eingelagerte Drähte dazu, die gewünschten Eigenschaften des Fahrzeugverdeckstoffes zu verschlechtern und sind den dynamischen Belastungen nicht dauerhaft gewachsen. Diese Beschränkungen führten dazu, dass elektrisch leitfähige Fahrzeugverdeckstoffe bislang keinen Einzug in die Fahrzeugherstellung gefunden haben.

Es ist Aufgabe der Erfindung, einen Fahrzeugverdeckstoff der eingangs genannten Art vorzuschlagen, welcher bei geringen Herstellungskosten einen zuverlässigen Blitzschutz nach Art eines faradayschen Käfigs für das solchermaßen ausgerüstete Fahrzeug ermöglicht und den hohen dynamischen und witterungsbedingten Anforderungen insbesondere bei der Anwendung an einem Cabriolet gewachsen ist.

Zur Lösung der gestellten Aufgabe wird erfindungsgemäß ein Fahrzeugverdeckstoff gemäß den Merkmalen des Patentanspruches 1 vorgeschlagen.

Vorteilhafte Ausgestaltungen und Weiterbildungen der Erfindung sind Gegenstand der abhängigen Ansprüche.

Die Erfindung sieht vor, zumindest einige der Kettgarne mit Kettfäden auszubilden, die gemeinsam mit mindestens einem monofilen und elektrisch leitfähigen Edelstahldraht zu dem Kettgarnen verzwirnt sind und/oder zumindest einige der Schussgarne so auszubilden, dass sie Schussfäden umfassen, die gemeinsam mit mindestens einem monofilen und elektrisch leitfähigen Edelstahldraht zu den Schussgarnen verzwirnt sind. Aus derartigen Kett- und Schussgarnen lassen sich Gewebebahnen herstellen, die zu einem Fahrzeugverdeckstoff verarbeitet werden können und elektrisch leitend mit dem Verdeckgestänge und/oder sonstigen leitfähigen Fahrzeugteilen verbunden werden können, um die gewünschte Schutzfunktion eines faradayschen Käfigs sicherzustellen.

Im Ergebnis wird eine Gewebebahn erhalten, die zu einem Fahrzeugverdeckstoff in an sich bekannter Weise verarbeitet werden kann, wobei die Gewebebahn wahlweise im Bereich einiger oder sämtlicher Kettgarne, im Bereich einiger oder aller Schussgarne oder sowohl im Bereich einiger oder aller Kettgarne und sowohl einiger oder aller Schussgarne einen durch Verzwirnen eingebrachten Edelstahldraht zusätzlich aufweist, der aufgrund seiner monofilen Ausführung über die gesamte Länge der Kett- bzw. Schussgarne verläuft und der Gewebebahn eine hohe elektrische Leitfähigkeit verleiht, die durchaus mit Metallplatten vergleichbar ist. Dadurch wirkt der solchermaßen ausgebildete Fahrzeugverdeckstoff als faradayscher Käfig und bietet den in dem Fahrzeug sitzenden Personen einen wirksamen Schutz vor Blitzschlag, selbst wenn ein solches Fahrzeug weitgehend mit nichtmetallischen Karosseriewerkstoffen hergestellt ist.

Erfindungsgemäß beeinträchtigt der in zumindest einige der Kettgarne und/oder einige der Schussgarne eingezwirnte Edelstahldraht die Verarbeitbarkeit, d.h. insbesondere die Webbarkeit zur Gewebebahn in keiner Weise, wofür die hohe Wechsellastfähigkeit des Edelstahldrahtes und dessen äußerst feiner Durchmesser maßgeblich verantwortlich zeigen. Insbesondere ist eine aus derartigen Kett- und Schussgarnen gewebte Gewebebahn auch weiterhin hoch flexibel und widerstandsfähig gegenüber Biegewechselbeanspruchungen, so dass sie den dynamischen Anforderungen eines Fahrzeugverdeckes vergleichbar mit konventionellen Gewebebahnen standhält.

Durch das erfindungsgemäß vorgesehene Verzwirnen der ausgewählten Kett- und/oder Schussfäden mit den Edelstahldrähten zu den Kett- bzw. Schussgarnen werden mechanische Eigenschaften der Kett- und Schussgarne, insbesondere Bruchdehnungswerte und Elastizitäten erreicht, die durch den Edelstahldraht aufgrund der Verzwirnung gegenüber rein aus Polymerkunststoffen hergestellten Kett- und Schussgarnen nicht nennenswert verschlechtert sind, so dass die erfindungsgemäß erhaltenen Fahrzeugverdeckstoffe trotz ihrer elektrischen Leitfähigkeit einem herkömmlichen Fahrzeugverdeckstoff ohne eingebrachte leitfähige Drähte vergleichbar sind.

Um der Witterungsbeständigkeit des Fahrzeugverdeckes nicht nachzustehen, wird nach einem Vorschlag der Erfindung der Edelstahldraht aus V2A- oder V4A-Edelstahl hergestellt.

Unter V2A-Edelstahl wird ein Edelstahl des Typs 1.4301 (X5CrNi18-10) verstanden, früher auch 1.4300 (X12CrNi18-8). Demgegenüber wird unter einem V4A-Edelstahl ein solcher verstanden, der zusätzlich mit 2% Molybdän (Mo) legiert ist, was diesen Stahl noch widerstandsfähiger gegen Korrosion durch chloridhaltige Medien, wie z.B. Salzwasser macht. Die allgemeine Bezeichnung für V4A-Edelstahl lautet 1.4401 (X5CrNiMo17-12-2).

Um die Herstellung der Gewebebahn aus miteinander verwobenen Kett- und Schussgarnen auf Basis von Polymerkunststoffen nicht negativ zu beeinflussen, wird nach einem weiteren Vorschlag der Erfindung vorgesehen, den Edelstahldraht in einem Durchmesser von 0,02 bis 0,30 mm auszuführen. Eine bevorzugte Ausführungsform weist einen Durchmesser von 0,05 mm auf. Derartige feine Edelstahldrähte behindern die Verarbeitung der aus verzwirnten Kett- bzw. Schussfäden sowie mindestens einem solchen Edelstahldraht hergestellten Kett- und Schussgarne im Rahmen der Verwebung zu einer erfindungsgemäßen Gewebebahn nicht, sorgen jedoch für die gewünschte elektrische Leitfähigkeit.

Darüber hinaus wurde im Rahmen der Erfindung festgestellt, dass eine solche zu einem Fahrzeugverdeckstoff verarbeitbare Gewebebahn aufgrund der ihr innewohnenden elektrischen Leitfähigkeit unempfindlich gegenüber statischer Aufladung ist und diese vollständig verhindert, so dass der Anhaftung von Staub und Sand sowie anderen Partikeln auf der Gewebebahn zuverlässig entgegengewirkt wird.

Auch wird durch die fehlende statische Aufladung der Gewebebahn die Herstellung und Konfektionierung derselben wesentlich vereinfacht.

Die Kett- und Schussfäden des erfindungsgemäßen Fahrzeugverdeckstoffes unterliegen hinsichtlich der Rohstoffauswahl keiner wesentlichen Beschränkung, jedoch werden üblicherweise und auch im Rahmen der Erfindung bevorzugt Kett- und Schussfäden aus Polyester oder Polyacrylnitril vorgesehen.

Die erfindungsgemäße Gewebebahn kann beispielsweise Kettgarne aus mehreren in einer ersten Drehrichtung einzeln verdrillten Kettfäden aufweisen. Die Kettgarne können auch lediglich aus einem einzelnen in einer ersten Drehrichtung verdrillten Kettfaden bestehen. Der demgemäß mindestens eine verdrillte Kettfaden wird bei Einbringung des mindestens einen Edelstahlfadens nach dem Verdrillen gemeinsam mit dem Edelstahlfaden in der der ersten Drehrichtung entgegengesetzten zweiten Drehrichtung verzwirnt, um ein Kettgarn zu bilden. Gleiches kann auch im Falle der Herstellung der Schussgarne entsprechend erfolgen. Die Edelstahldrähte können lediglich mit den Kettfäden zu den Kettgarnen verzwirnt werden. Auch ist es möglich, dass die Edelstahldrähte lediglich im Bereich der Schussgarne zusammen mit den Schussfäden zu den Schussgarnen verzwirnt werden. Außerdem ist es möglich, sowohl Kettgarne als auch Schussgarne wie vorstehend beschrieben mit Edelstahldrähten auszubilden.

Die zu den Kett- und Schussgarnen verarbeiteten Kettfäden bzw. Schussfäden können als Monofile vorliegen oder als Filamentgarn oder auch als gesponnene Fasergarne vorliegen. Üblicherweise können gesponnene Fasergarne spinndüsengefärbt sein.

Im Rahmen der Erfindung ist vorgesehen, einzelne oder alle der vorangehend beschriebenen Kettgarne und/oder Schussgarne während des Verzwirnens zu den Kettgarnen oder Schussgarnen unter Hinzunahme mindestens eines Edelstahldrahts gemeinsam zu verzwirnen, d.h. beispielsweise zur Ausbildung eines Kettgarns werden mehrere in der ersten Drehrichtung einzeln verdrillte Kettfäden und der mindestens eine Edelstahldraht gemeinsam entgegen der ersten Drehrichtung verzwirnt und/oder die Schussfäden sowie mindestens ein Edelstahldraht werden gemeinsam zu den Schussgarnen verzwirnt.

Das erfindungsgemäße Fahrzeugverdeck mit der vorgeschlagenen elektrisch leitfähigen Gewebebahn kann so ausgebildet sein, dass die Gewebebahn allein den Fahrzeugverdeckstoff bildet, so dass ein sehr leichter Stoff z.B. für Leichtbaufahrzeuge mit eingeschränktem Wetterschutz erhalten wird.

Im Allgemeinen umfassen Fahrzeugverdeckstoffe für Cabriolets und ähnliche Anwendungen jedoch einen mindestens dreischichtigen Aufbau aus einem Oberstoff, einem Unterstoff und einer dazwischen angeordneten Gummierung aus Elastomerwerkstoffen. Erfindungsgemäß kann die elektrisch leitfähige Gewebebahn sowohl den Oberstoff als auch den Unterstoff ausbilden als auch im Bereich der Gummierung angeordnet sein.

Sofern das Fahrzeugverdeck auch einen das Verdeckgestänge verdeckenden Innenhimmel aufweist, könnte die erfindungsgemäß vorgeschlagene elektrisch leitfähige Gewebebahn auch diesen Innenhimmel ausbilden.

Wesentlich ist lediglich, dass die elektrisch leitfähige Gewebebahn des Fahrzeugverdeckstoffs in Kontakt mit der mit der weiteren Karosserie verbunden Tragstruktur, d.h. insbesondere dem Verdeckgestänge steht, so dass eine elektrische Verbindung zwischen diesen Teilen und der Gewebebahn aufgebaut wird, um den faradayschen Käfig für die Insassen auszubilden.

Die Gewebebahn ist in sich hoch leitfähig, da jeweils an den Kreuzungspunkten der den Edelstahldraht aufweisenden Kett- und Schussgarne diese ebenfalls elektrisch miteinander verbunden sind. So wird ein spezifischer Oberflächenwiderstand der Gewebebahn von höchstens 10⁵ Ω, vorzugsweise höchstens 10³Ω erreicht.

Die Erfindung wird nachfolgend anhand der ein Ausführungsbeispiel darstellenden Zeichnung weiter erläutert.

Es zeigen:
- Figur 1: in schematisierter Darstellung eine Gewebebahn zur Ausbildung eines erfindungsgemäßen Fahrzeugverdeckstoffes;
- Figur 2: ein Kett- bzw. Schussgarn zum Einsatz in der Gewebebahn des erfindungsgemäßen Fahrzeugverdeckstoffes.

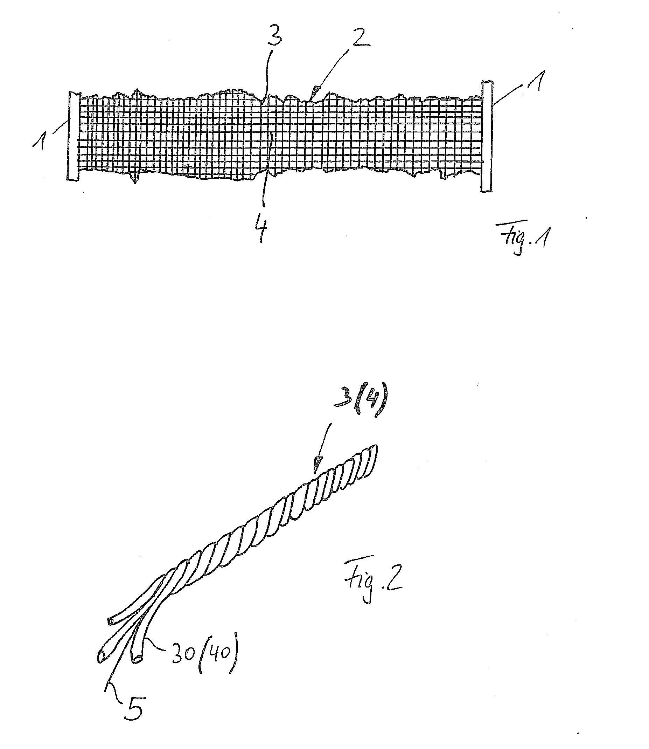

Aus der Figur 1 ist in stark vereinfachter Darstellung ein Fahrzeugverdeckstoff umfassend eine beispielsweise metallische und hier in nicht näher dargestellter Weise mit der Fahrzeugkarosserie elektrisch leitend verbundene Tragstruktur 1, insbesondere ein Verdeckgestänge, sowie eine von der Tragstruktur 1 aufspannbare Gewebebahn 2 dargestellt, die aus miteinander verwobenen Kett- und Schussgarnen 3, 4 z.B. auf Basis von Polyacrylnitril gebildet ist.

Die Kett- und Schussgarne 3, 4 sind in einer beliebigen geeigneten Webart zu der Gewebebahn 2 gewebt.

Wesentliches Merkmal der aus der Figur 1 ersichtlichen und mit der Tragstruktur 1 aufgespannten Gewebebahn 2 ist es, dass zumindest einige der Kett- und Schussgarne 3, 4, vorzugsweise in regelmäßiger Anordnung einen aus der Figur 2 ersichtlichen Aufbau aufweisen.

Die einzelnen Kett- und Schussgarne 3, 4 sind hierbei aus mehreren, hier drei miteinander verzwirnten Kettfäden 30 bzw. im Falle eines Schussgarns 4 aus entsprechenden Schussfäden 40 gebildet, die in nicht näher dargestellter Weise zunächst einzeln mit beispielsweise 150 Touren/m in einer ersten Drehrichtung verdrillt und anschließend gemeinsam mit 200 Touren/m entgegen der ersten Drehrichtung, d.h. in der zweiten Drehrichtung verzwirnt werden.

Zusätzlich zu den Kettfäden 30 bzw. Schussfäden 40 ist dabei jeweils ein monofiler und elektrisch leitender Edelstahldraht 5 gemeinsam mit den Kettfäden 30 bzw. Schussfäden 40 zu dem Kettgarn 3 bzw. Schussgarn 4 verzwirnt, so dass dieser in regelmäßigen Abständen an der Oberfläche der Kettgarne 3 bzw. Schussgarne 4 in Erscheinung tritt.

Die übrigen Kettgarne 3 bzw. Schussgarne 4 der Gewebebahn 2 weisen einen identischen Aufbau auf, jedoch fehlt ihnen der eingearbeitete Edelstahldraht 5.

Es ist selbstverständlich auch möglich, sämtliche Kett- und Schussgarne 3, 4 mit dem eingezwirnten Edelstahldraht 5 zu versehen.

Der Edelstahldraht 5 kann beispielsweise aus V4A-Edelstahl eines Durchmessers von 0,05 mm hergestellt sein.

Aufgrund der Präsenz des Edelstahldrahtes an Oberflächenbereichen der Kett- und Schussgarne 3, 4 wird die Verarbeitbarkeit, d.h. insbesondere deren Webbarkeit zur Gewebebahn 2 in keiner Weise beeinträchtigt, wofür die hohe Wechsellastfähigkeit des Edelstahldrahtes 5 und dessen äußerst feiner Durchmesser maßgeblich verantwortlich zeigen.

Die eingearbeiteten monofilen Edelstahldrähte 5 verleihen der Gewebebahn 2 eine hohe elektrische Leitfähigkeit, die es ermöglicht, in Verbindung mit einer entsprechend an weiteren Karosseriebauteilen befestigten Tragstruktur 1 und einer elektrisch leitenden Verbindung zwischen der Gewebebahn 2 und der Tragstruktur 1 nicht nur in der Gewebebahn etwaig entstehende elektrostatische Aufladung unmittelbar abzuleiten, so dass einer durch elektrostatischer Aufladung bedingten Anhaftung von Staub, Sand und sonstigen Partikeln auf der Oberfläche der Gewebebahn 2 wirkungsvoll entgegengewirkt wird.

Es hat sich auch gezeigt, dass eine solche Gewebebahn 2 bereits während der Herstellung derselben wesentlich leichter zu verarbeiten ist, da jegliche Entstehung statischer Aufladung bereits im Ansatz unterbunden wird, was z.B. das Handling im Webstuhl und die nachfolgende Konfektionierung enorm vereinfacht.

Darüber hinaus bildet eine solche mit einer mit der übrigen Karosserie verbundenen elektrisch leitfähigen Tragstruktur 1 und die mit dieser elektrisch verbundene Gewebebahn 2 einen faradayschen Käfig und gewährleistet für das solchermaßen ausgerüstete Fahrzeugt einen wirkungsvollen Schutz vor Blitzschlag z.B. während eines Gewitters.

Die elektrisch leitende Verbindung zwischen Tragstruktur 1 und Gewebebahn 2 kommt durch Kontakt derselben aneinander zustande.

Die Art und Anzahl der Edelstahldrähte 5 innerhalb eines einzelnen Kettgarnes 3 bzw. Schussgarnes 4 und die Auswahl der Anzahl von mit dem Edelstahldraht 5 versehenen Kettgarne 3 bzw. Schussgarne 4 im Rahmen der gesamten Gewebebahn ist vom Fachmann je nach Anwendungsfall beliebig auswählbar.

Ein mit einer solchermaßen hergestellten Gewebebahn hergestelltes Fahrzeugverdeck bietet neben der Verhinderung der statischen Aufladung bei einem solchermaßen ausgerüsteten Fahrzeug auch bei Verwendung von Leichtbaukunststoffen für Karosseriebauteile den Aufbau eines zuverlässigen faradayschen Käfigs für die Insassen des Fahrzeuges, so dass die Blitzschutzfunktion vergleichbar mit einer Stahlkarosserie aufrechterhalten wird.

## Patentansprüche

1. Fahrzeugverdeckstoff, enthaltend eine Gewebebahn (2) aus miteinander verwobenen Kett- und Schussgarnen (3, 4) auf Basis von Polymerkunststoffen, wobei die Kettgarne (3) aus Kettfäden (30) und die Schussgarne (4) aus Schussfäden (40) gebildet sind und Drähte aus elektrisch leitendem Material in die Gewebebahn (2) eingelagert sind, **dadurch gekennzeichnet, dass**
• zumindest einige der Kettgarne (3) Kettfäden (30) umfassen, die gemeinsam mit mindestens einem monofilen und elektrisch leitfähigen Edelstahldraht (5) zu den Kettgarnen (3) verzwirnt sind; und/oder
• zumindest einige der Schussgarne (4) Schussfäden (40) umfassen, die gemeinsam mit mindestens einem monofilen und elektrisch leitfähigen Edelstahldraht (5) zu den Schussgarnen (4) verzwirnt sind.

2. Fahrzeugverdeckstoff nach Anspruch 1, **dadurch gekennzeichnet, dass** der Edelstahldraht (5) aus V2A- oder V4A-Edelstahl hergestellt ist.

3. Fahrzeugverdeckstoff nach Anspruch 1 oder 2, **dadurch gekennzeichnet, dass** der Edelstahldraht einen Durchmesser von 0,02 bis 0,30 mm aufweist.

4. Fahrzeugverdeckstoff nach einem der Ansprüche 1 bis 3, **dadurch gekennzeichnet, dass** die Kett- und Schussfäden (3, 4) als Monofile, Filamentgarne oder gesponnene Fasergarne ausgebildet sind.

5. Fahrzeugverdeckstoff nach einem der Ansprüche 1 bis 4, **dadurch gekennzeichnet, dass** die Kett- und Schussfäden (3, 4) aus Polyester oder Polyacrylnitril gebildet sind.

6. Fahrzeugverdeckstoff nach einem der Ansprüche 1 bis 5, **dadurch gekennzeichnet, dass** zur Ausbildung eines Kettgarns (3) mehrere in der ersten Drehrichtung einzeln verdrillte Kettfäden (30) und mindestens ein Edelstahldraht (5) gemeinsam entgegen der ersten Drehrichtung verzwirnt sind.

7. Fahrzeugverdeckstoff nach einem der Ansprüche 1 bis 6, **dadurch gekennzeichnet, dass** zur Ausbildung eines Schussgarnes (4) mindestens ein in einer ersten Drehrichtung einzeln verdrillter Schussfaden (40) und mindestens ein Edelstahldraht (5) gemeinsam entgegen der ersten Drehrichtung verzwirnt sind.

8. Fahrzeugverdeckstoff nach einem der Ansprüche 1 bis 7, **dadurch gekennzeichnet, dass** die Gewebebahn (2) einen spezifischen Oberflächenwiderstand von höchstens 10⁵ Ω aufweist.

9. Fahrzeugverdeckstoff nach einem der Ansprüche 1 bis 8, **dadurch gekennzeichnet, dass** er einen äußeren sichtbaren Oberstoff, einen Unterstoff und eine dazwischen angeordnete Gummierung aufweist und die Gewebebahn (2) den Oberstoff oder Unterstoff ausbildet oder im Bereich der Gummierung angeordnet ist.
